# EUROPEAN PATENT SPECIFICATION

(11) **EP 4 517 152 B1**
(45) Date of publication and mention of the grant of the patent: **30.09.2026**
(21) Application number: 24197329.6
(22) Date of filing: 29.08.2024
(51) Int. Cl.: F17C 3/08, F17C 13/02, F17C 13/06

(54) **STORAGE TANK ARRANGEMENT**
LAGERTANKANORDNUNG
ARRANGEMENT DE RESERVOIR DE STOCKAGE

(30) Priority: 01.09.2023 GB 202313344
(43) Date of publication of application: 05.03.2025
(73) Proprietor: Airbus Operations Limited, Bristol BS34 7PA (GB); AIRBUS Operations GmbH, 21129 Hamburg (DE)
(72) Inventor: LAWRENCE, Harry, Bristol, BS34 7PA (GB); RUIZ DE PABLO, Javier, Bristol, BS34 7PA (GB); SCHWENKENBERG, Dominik, 21129 Hamburg (DE); ROSE, Frank, 21129 Hamburg (DE); MISTRY, Pramod, Bristol, BS16 7FD (GB)
(74) Representative: Abel & Imray LLP

(56) References cited:
- EP-A1- 2 937 297
- WO-A1-2017/042424
- CN-A- 108 565 818
- US-A1- 2005 139 600

## Description

### BACKGROUND OF THE INVENTION

The present disclosure relates to storage tanks, particularly those for the storage of volatile liquids.

The present invention concerns storage tanks, particularly those suitable for the storage of volatile liquids. More particularly, but not exclusively, this invention concerns a storage tank arrangement suitable for the storage of volatile liquids. The invention also concerns a vehicle comprising a storage tank arrangement for the storage of volatile liquids.

Sensors are often deployed in storage tanks that are used to store volatile liquids, such as liquid gases, for example, liquid oxygen, liquid nitrogen, liquid helium, liquid hydrogen and liquid petroleum gas (often known as LPG). The sensors typically comprise optical fibres or electrical wires that extend into the interior of the storage tank. Typically, sealing elements known as feedthroughs are used to facilitate placement of the sensors in the storage tank. Feedthroughs form a seal with a surface of the storage tank, and provide one or more apertures in an elastically-deformable material for the insertion therethrough of an optical fibre or wire. The feedthrough is configured so that when the optical fibre or wire is in place, the elastically-deformable material forms a seal against the optical fibre or wire.

Conventionally, storage tanks that are used to store volatile liquids, such as liquid gases, typically comprise an inner and an outer wall separated by a thermally-insulating region. That thermally-insulating region is usually a low pressure or vacuum region. Conventionally, an inner feedthrough is located in the storage tank inner wall and an outer feedthrough is located in the storage tank outer wall. The inner and outer feedthroughs are usually arranged "in line" so that optical fibres or electrical wires can be easily passed through the inner and outer feedthroughs. Failure of the inner feedthrough may lead to gas occupying the low-pressure region between the inner and outer walls, reducing the effectiveness of the formerly thermally-insulating region, leading to unwanted heating of the contents of the storage tank. Furthermore, if the outer feedthrough fails, then ambient gas (likely air) would enter the low-pressure region, once again reducing the effectiveness of the formerly thermally-insulating region between the storage tank inner and outer walls. WO2017/042424 describes a fuel tank arrangement of a marine vessel comprising a fuel tank with a manhole structure with inner and outer manholes. CN108565818 describes a device that facilitates the introduction of cabling into the interior of a double-walled vacuum-insulated container. US2005/139600 describes a double-walled vacuum-insulated container for holding a cryogenic fluid comprising a support structure for supporting an inner vessel within an outer vessel.

The present invention seeks to mitigate one or more of the above-mentioned problems. Alternatively or additionally, the present invention seeks to provide an improved storage tank arrangement.

### SUMMARY OF THE INVENTION

In accordance with a merely illustrative embodiment, , there is provided a storage tank arrangement, optionally suitable for a vehicle, comprising:
a storage tank suitable for the storage of liquid gas comprising a tank inner wall and a tank outer wall separated by an insulating inter-wall region;
inner and outer feedthrough arrangements, each configured to form a seal with a respective surface of the storage tank arrangement and to permit passage therethrough of one or more sensor cords, and/or permit connection of one or more sensors; and
a container external of the storage tank outer wall, the container being configured to inhibit egress of the contents of the storage tank in the event of a failure of at least one of the inner and outer feedthrough arrangements.

The applicant has discovered that it is possible to inhibit egress of the contents of the storage tank in the event of a failure of at least one of the inner and outer feedthrough arrangements by the suitable location of a container external of the storage tank outer wall, thereby containing any leak.

The storage tank arrangement may optionally be configured to inhibit entry of the contents of the storage tank into at least 90%, optionally at least 95%, optionally at least 98% and optionally at least 99% of the inter-wall region in the event of a failure of the inner and/or outer feedthrough arrangement, typically in the event of a failure of the inner feedthrough arrangement. The storage tank arrangement may therefore be configured so that, in the event of a failure of the inner and/or outer feedthrough arrangement, and in particular in the event of a failure of the inner feedthrough arrangement, contents of the storage tank is permitted to enter a feedthrough region between the storage tank inner and outer walls, which feedthrough region is isolated from the remainder of the inter-wall region. Such an arrangement may inhibit unwanted reduction in the thermal insulating properties of the inter-wall region.

One way of inhibiting entry of the content of the storage tank into the vast majority of the inter-wall region in the event of a failure of a respective feedthrough arrangement is to isolate any gas or other escaping storage tank content from the vast majority of the inter-wall region, while providing a path for electrical wires or optical fibres. Optionally, the inner and outer feedthrough arrangements define a feedthrough path therebetween, the feedthrough path being at least partially located in the feedthrough region between the storage tank inner and outer walls. The feedthrough region is isolated from an adjacent inter-wall region. Such an arrangement may ensure that any leaked storage tank content is contained.

For the avoidance of doubt, those skilled in the art will realise that the one or more sensors are not necessarily part of the storage tank arrangement of the present invention. For the avoidance of doubt, those skilled in the art will realise that the storage tank arrangement need not be provided with volatile liquid.

In accordance with a first aspect of the present invention, there is provided a storage tank arrangement in accordance with claim 1.

The applicant has discovered that it is possible to inhibit entry of the contents of the storage tank into the vast majority of the inter-wall region in the event of a failure of a feedthrough arrangement by isolating the feedthrough region from the inter-wall region. This may optionally be done using a fluid-impermeable partition, for example, to isolate the feedthrough region from the adjacent inter-wall region.

The storage tank arrangement of the first aspect of the present invention may comprise a container external of the storage tank outer wall, configured to inhibit egress of the contents of the storage tank in the event of a failure of at least one of the inner and outer feedthrough arrangements.

For the avoidance of doubt, the statements below relate to both the storage tank arrangement of the first aspect of the present invention and the merely illustrative storage tank arrangement.

The storage tank arrangement may be suitable for the storage of a liquid gas, such as liquid hydrogen, helium, nitrogen, oxygen or petroleum gas. The storage tank may be suitable for the storage of a liquid gas, such as liquid hydrogen, helium, nitrogen, oxygen or petroleum gas. In this connection, "liquid gas" refers to something that would be a gas at room temperature and atmospheric pressure, but is more conveniently stored as a liquid, usually cooled and optionally at a pressure greater than atmospheric pressure.

The storage tank arrangement may be a fuel tank arrangement, optionally suitable for a vehicle. The applicant has discovered that the storage tank arrangements of the first and second aspects of the present invention are of particular use for fuel tanks, which tend to be used in confined spaces, in which escape of gaseous fuel may be undesirable, especially is those fuels are dangerous (for example, flammable, explosive and/or toxic).

The inner and/or outer feedthrough arrangement may comprise one or more feedthrough elements, each feedthrough element being configured to form a seal with a respective surface of the storage tank arrangement and to permit passage of one or more sensor cords therethrough, and/or permit connection of one or more sensors. For example, one or both of the inner and outer feedthrough elements may comprise a first feedthrough element configured to form a seal with a first portion of a respective surface of the storage tank arrangement, and a second feedthrough element configured to form a seal with a second portion of said surface with which the first feedthrough element forms a seal. For example, a first feedthrough element may be configured to form a seal with a first portion of a surface of the storage tank inner wall or the storage tank outer wall, and the second feedthrough element may be configured to form a seal with a second portion of said surface of the storage tank inner wall or the storage tank outer wall.

As mentioned above, each of the inner and outer feedthroughs forms a seal with a respective surface of the storage tank arrangement and permit passage therethrough of one or more sensor cords, and/or permits connection of one or more sensors. In this connection, a sensor optionally comprises a cord for the transmission of suitable signals, optionally to and/or from a sensor head. The sensor head optionally comprises the sensing part of the sensor. For example, a thermocouple sensor for the measurement of temperature may comprise a thermocouple head comprising two dissimilar electrical conductors, and a cord for transmitting electrical signals to and from the thermocouple head. The cord may be configured to transmit electrical signals or light signals, for example. For example, the cord may comprise optical fibre for the transmission of light signals. For the avoidance of doubt, "light" refers to all suitable wavelengths of electromagnetic radiation that may be transmitted through an optical fibre, irrespective of whether or not the electromagnetic radiation is visible. For example, the inner and/or outer feedthrough may be configured to permit the passage therethrough of one or more cords. One or both of the inner and outer feedthroughs may be configured to permit connection of one or more sensors. For example, one or both of the inner and outer feedthroughs may comprise one or more ports configured to permit connection to one or more sensors. For example, the inner feedthrough may comprise with a first set of ports configured to permit connection to one or more sensors and the outer feedthrough may comprise a second set of ports configured to permit connection to one or more sensors. One or more, and optionally a plurality of, cords may be provided to connect the first set of ports to the second set of ports. This connection arrangement dispenses with the need to pass cords from the exterior of the storage tank arrangement, through the outer and inner feedthroughs, into the interior of the storage tank.

For the avoidance of doubt, the words "inner" and "outer" as used in "inner feedthrough arrangement" and "outer feedthrough arrangement" refer to the position of the respective feedthrough arrangements relative to one another.

As mentioned above, the inner and outer feedthrough arrangements defines a feedthrough path therebetween, the feedthrough path being at least partially located in a feedthrough region between the storage tank inner and outer walls, the feedthrough region being isolated from an adjacent inter-wall region between the storage tank inner and outer walls. The feedthrough region is isolated from the remainder of the inter-wall region by a divider. The divider may inhibit passage of fluid between the feedthrough region and the adjacent inter-wall region. The divider may extend between the storage tank inner and outer walls. The divider may, for example, comprise a fluid-impermeable wall. The divider may be cylindrical, for example.

The storage tank arrangement comprises a spacer arrangement for maintaining the storage tank inner and outer walls in spaced relationship. A portion of the spacer arrangement may extend between the storage tank inner and outer walls. A portion of the spacer may be located external to the storage tank outer wall. A portion of the spacer arrangement may be located internally of the storage tank inner wall. The spacer arrangement comprises an outer attachment portion for securing the spacer arrangement to the storage tank outer wall. The spacer arrangement comprises an inner attachment portion for securing the spacer arrangement to the storage tank inner wall. The spacer arrangement comprises a spacing portion for maintaining the storage tank inner and outer walls in spaced relationship. The spacing portion may maintain the inner and outer attachment portions in spaced relationship. The spacer arrangement, and optionally the spacing portion, may provide a feedthrough path between the inner and outer feedthrough arrangements, the feedthrough path being at least partially located in a feedthrough region between the storage tank inner and outer walls, the feedthrough region being isolated from an adjacent inter-wall region between the storage tank inner and outer walls. The spacer arrangement, and optionally the spacing portion, may optionally provide the feedthrough region. For example, the spacer arrangement, and optionally the spacing portion, may define an internal space, at least a portion of which may comprise the feedthrough region. The spacer arrangement, and optionally the spacing portion, may be configured to define the feedthrough region, isolated from the adjacent inter-wall region. For example, the spacer arrangement, and optionally the spacing portion, may comprise one or more spacer walls configured to isolate the feedthrough region from the adjacent inter-wall region.

The spacing portion may comprise an elongate hollow portion, such as a cylinder. The spacing portion may extend inward of the inner attachment portion and may optionally extend outward of the outer attachment portion.

The inner feedthrough arrangement is optionally sealed to the storage tank inner wall. This provides a convenient place for the location of the inner feedthrough arrangement.

The inner feedthrough arrangement is sealed to a third wall, the third wall being located internally of the storage tank inner wall. If the storage tank arrangement comprises a spacer arrangement for maintaining the storage tank inner and outer walls in spaced relationship, the spacer arrangement comprising a spacing portion, the third wall may optionally be internally of the spacing portion. The spacer arrangement may comprise the third wall. The third wall and the inner attachment portion define a space therebetween, the space therebetween optionally being provided with insulating material. This insulating material may provide a thermal break, inhibiting warming of the contents of the storage tank. The spacer arrangement may, for example, comprise what is sometimes known as a polar mount. A polar mount is optionally sometimes provided to maintain the storage tank inner and outer walls in spaced relationship.

The storage tank arrangement may comprise one or more cord guides for securing one or more cords. Typically, the or each cord guide may be configured to secure a plurality of cords. One or more cord guides may be located between the inner and outer feedthrough arrangements. The storage tank arrangement may comprise a plurality of mutually-spaced cord guides. The plurality of mutually-spaced cord guides may be located between the inner and outer feedthrough arrangements.

The or each cord guide may comprise a cord guide mount for mounting the cord guide to the storage tank arrangement. The or each cord guide may comprise a carrier portion that is attachable to the cord guide mount, the carrier portion being attachable to the cord guide mount in a plurality of different orientations.

The or each cord guide may comprise means for securing one or more cords. The or each means for securing one or more cords may be provided by, or be coupled to, the carrier portion. The means for securing one or more cords may, for example, comprise a clamp. The clamp may be operable between an open configuration and a clamped configuration. The clamp may comprise a clamp member, such as an arm, that is movable between a first position in which the clamp is in the open configuration and a second position in which the clamp is in a clamped configuration. The clamp may be provided with one or more recesses for the receipt of a cord. The clamp member may be provided with one or more recesses for the receipt of a cord.

One or more cord guides may comprise a sensor mount for mounting a sensor.

The inner feedthrough arrangement may optionally be sealed to surface of a conduit. The inner feedthrough arrangement may optionally be sealed to an internal surface of a conduit. The conduit may comprise a wall. The inner feedthrough arrangement may optionally be sealed to an internal surface of the wall. The conduit may comprise a two-walled conduit, with a first, conduit inner wall spaced from a second, conduit outer wall. The inner feedthrough arrangement may optionally be sealed to an internal surface of the first, conduit inner wall. The conduit may optionally extend into the space bounded by the container. The interior of the conduit may be in fluid communication with the interior of the storage tank. A portion of the conduit may optionally be located within the interior of the storage tank. The conduit may comprise a detachable conduit portion comprising one or both of the inner and outer feedthrough arrangements. The detachable conduit portion may be attachable to, and detachable from, a further conduit portion. The further conduit portion is optionally located inwards of the detachable conduit portion. The detachability of the detachable conduit portion facilitates easier mounting and demounting of the inner and/or outer feedthrough arrangements.

The outer feedthrough arrangement may optionally be sealed to a surface of the container. For example, the outer feedthrough arrangement may optionally be sealed to an internal or external surface of the container. The outer feedthrough arrangement may optionally be sealed to an end portion of the container. This provides a convenient location for the feedthrough arrangement.

The outer feedthrough arrangement may optionally be sealed to a surface of a conduit. The outer feedthrough arrangement may optionally be sealed to an internal surface of a conduit. The conduit may comprise a wall. The outer feedthrough arrangement may optionally be sealed to an internal surface of the wall. Optionally, the inner and outer feedthrough arrangements may optionally be sealed to a same internal surface of the wall, the inner feedthrough arrangement being sealed to a first portion of the wall and the outer feedthrough arrangement being sealed to a second portion of the wall, the second portion of the wall being located outward of the first portion of the wall. The conduit may comprise a two-walled conduit, with a first, conduit inner wall spaced from a second, conduit outer wall. The outer feedthrough arrangement may optionally be sealed to an internal surface of the second, conduit outer wall.

As mentioned above, the outer feedthrough arrangement may be sealed to a surface of a conduit. The conduit may act as a spacer to maintain the storage tank inner and outer walls in spaced relationship. Such a conduit is sometimes known as a "polar mount". The conduit may extend externally of the storage tank outer wall.

The inner and outer feedthrough arrangements may optionally be configured to define a space therebetween for the location of one or more sensor heads (for example, a pressure sensor head for leak detection).

One or both of the inner and outer feedthrough arrangements may comprise a plurality of feedthrough ports, each one being for the passage therethrough of, or connection to, a sensor. Each port may be configured to form a seal with a sensor received in the feedthrough port.

One or both of the inner and outer feedthrough arrangements may optionally comprise at least two, at least three or optionally at least four feedthrough ports.

The container may be attached to the storage tank outer wall, either directly or indirectly. The container may be attached to a spacer arrangement configured to maintain storage tank inner and outer walls in spaced relationship. At least a portion of the spacer arrangement may extend externally of the storage tank outer wall.

The container may be configured to withstand reduced pressure, such as those pressures associated with the use of vacuum pumps.

The container may be provided with one or more pressure-change ports for connection to a means for changing the pressure in the container, such as a pump configured to reduce pressure or a pump configured to increase pressure. At least one, optionally more than one and optionally each pressure-change port may comprise a fitting to facilitate connection to a corresponding fitting associated with a means for changing pressure in the container. For example, a pressure-change port may comprise a fitting that is configured to mate with a corresponding fitting provided on a conduit that is connected to, or connectable to, a means for changing pressure in the container, such as a pump, such as a vacuum pump.

The container may comprise one or more access apertures to facilitate access to the interior of the container and/or to other parts of the storage tank arrangement. Such access apertures are optionally configured to permit manual (i.e. adult human hand) access to the interior of the container. The container may comprise one or more covers for covering access apertures. Optionally, each access aperture may be provided with a cover. At least one, optionally more than and optionally each cover may be removable and/or replaceable. At least one, optionally more than and optionally each cover may be a panel. At least one, optionally more than and optionally each cover may comprise a container wall, such as an end wall of the container.

The container may optionally have substantially the same cross-sectional shape and size along its length. The container may optionally be substantially cylindrical. The container may optionally be substantially circular cylindrical.

Optionally, the storage tank arrangement comprises a container external of the storage tank outer wall, configured to inhibit egress of storage tank contents in the event of a failure of at least one of the inner and outer feedthrough arrangements. The container may optionally be configured to inhibit egress of storage tank contents in the event of a failure of the inner feedthrough arrangement, and optionally in the event of a failure of the inner feedthrough arrangement, but not the outer feedthrough arrangement. The container may be configured to inhibit egress of storage tank contents in the event of a failure of the outer feedthrough arrangement, and optionally in the event of a failure of the outer feedthrough arrangement, but not the inner feedthrough arrangement. The container may optionally be configured to inhibit egress of storage tank contents in the event of a failure of both the inner feedthrough arrangement and the outer feedthrough arrangement.

The storage tank arrangement may comprise one or more sensors. As mentioned above, a sensor may comprise a wire or cable for the transmission of signals, such as electrical or light, to and/or from a sensor head. One or more sensor head may be located in the interior of the storage tank. One or more sensor heads, and optionally at least two sensor heads, may be located between the inner and outer feedthrough arrangements, optionally in a space between the inner and outer feedthrough arrangements. At least two of the sensor heads may optionally be configured to sense mutually-different phenomena. For example, a first sensor may be configured to detect gas pressure and a second sensor may be configured to detect the presence or absence of a particular gas, such as hydrogen. One or more of the sensors may optionally be configured to sense and/or measure one or more of the following parameters: pressure; temperature; presence and/or concentration of one or more gases, such as hydrogen gas; presence and/or amount of one or more liquids, such as liquid hydrogen.

The storage tank arrangement may comprise a vessel in addition to said container, the vessel optionally being located inward of the inner feedthrough arrangement. The vessel is optionally located inward of the storage tank inner wall. If the storage tank arrangement comprises a third wall, located inwards of the storage tank inner wall, the vessel may be located inwards of the third wall. The vessel may, together with the third wall, define a volume. The vessel may be located in the interior of the storage tank. The vessel may be provided with a further feedthrough arrangement, optionally located inwards of the inner feedthrough arrangement. The further feedthrough arrangement may comprise one or more of the features of the inner and/or outer feedthrough arrangements.

As mentioned above, the storage tank arrangement may comprise one or more further feedthrough arrangement(s) in addition to the inner and outer feedthrough arrangements. For the avoidance of doubt, the inner feedthrough arrangement need not be the innermost feedthrough arrangement, and the outer feedthrough arrangement need not be the outermost feedthrough arrangement. The words "inner" and "outer" describe the relative positions of the inner and outer feedthrough arrangements. For example, if the storage tank arrangement comprises a polar mount, or a spacer, that maintains the storage tank inner and outer walls in spaced arrangement, the spacer or polar mount (optionally in the form of a cylinder) may be provided with the outer feedthrough arrangement, facilitating feedthrough of optical fibres and wires from the interior of the polar mount to the container. The container may be provided with an additional feedthrough arrangement, for example, located in, and forming a seal with, a face, and optionally an end, portion of the container.

The storage tank arrangement may optionally be provided with a means for permitting relative movement of the storage tank inner and outer walls, for example, movement that may occur due to shrinkage and/or expansion of the respective walls, dependent on the temperature to which those walls are subjected. For example, an expandable member, such as a bellows, may be provided.

If the storage tank arrangement comprises a conduit that is optionally attached to one or both of the storage tank inner and outer walls, then optionally a means for permitting relative movement of the conduit and one or both of the storage tank inner and outer walls may be provided. Such movement that may occur due to shrinkage and/or expansion of the respective walls and conduit, dependent on the temperature to which the walls and conduit are subjected, and the material from which the respective components are made. For example, an expandable member, such as a bellows, may be provided.

In accordance with a further merely illustrative embodiment, there is provided a storage tank arrangement suitable for the storage of liquid gas, comprising:
a storage tank suitable for the storage of liquid gas comprising a storage tank inner wall and a storage tank outer wall separated by an insulating inter-wall region;
inner and outer feedthrough arrangements, each configured to form a seal with a respective surface of the storage tank arrangement and to permit passage therethrough of one or more sensor cords, and/or permit connection of one or more sensors; and
a conduit which is in gaseous communication with the interior of the storage tank, wherein the conduit comprises:
   a detachable conduit portion, which is detachable to, and removable from, a further conduit portion, the detachable conduit portion being provided with at least one of the inner and outer feedthrough arrangements.

The applicant has discovered that it may be advantageous to provide a portion of the conduit that houses at least one of the inner and outer feedthroughs and that is detachable to facilitate removal, repair and servicing of the inner and/or outer feedthroughs.

The storage tank arrangement optionally comprises a leak detection zone between the inner and outer feedthrough arrangements.

The conduit may comprise an inner wall and an outer wall, wherein the conduit inner wall is optionally substantially parallel to the outer wall. At least one of the inner feedthrough arrangement and the outer feedthrough arrangement is configured to form a seal with the inner wall of the conduit. The inner feedthrough arrangement may optionally be configured to form a seal with the inner wall of the conduit. The outer feedthrough arrangement may optionally be configured to form a seal with the outer wall of the conduit.

The detachable conduit portion may be located external to the storage tank.

The storage tank arrangement may comprise a container external of the storage tank outer wall, the container being configured to inhibit egress of the contents of the storage tank in the event of a failure of at least one of the inner and outer feedthrough arrangements.

Optionally, the inner and outer feedthrough arrangements defining a feedthrough path therebetween, the feedthrough path being at least partially located in a feedthrough region between the storage tank inner and outer walls, the feedthrough region being isolated from an adjacent inter-wall region between the storage tank inner and outer walls.

The storage tank arrangement of the further merely illustrative embodiment may comprise one or more features of the storage tank arrangements of the first and second aspects of the present invention.

In accordance with a second aspect of the present invention, there is provided a vehicle comprising a storage tank arrangement in accordance with the first aspects of the present invention.

The vehicle may comprise one or more engines configured to receive fuel from the storage tank arrangement.

The vehicle may comprise more than one storage tank arrangement in accordance with the first, second and/or third aspects of the present invention.

The vehicle may be a terrestrial vehicle, such as a road-based vehicle or a rail-based vehicle, a water-based vehicle, or an aircraft. The vehicle may be configured for the conveyance of passengers, passengers typically being persons not associated with the operation of the vehicle. A road-based vehicle may comprise a two-wheeled, four-wheeled or multi-wheeled vehicle comprising more than four wheels. A road-based vehicle may comprise a motorbike, moped, car, van, truck, lorry, bus or minibus, for example. The rail-based vehicle may comprise a train or tram, for example. The aircraft may be a fixed-wing aircraft or a rotary wing aircraft. The aircraft may be a single engine aircraft or may comprise more than one engine, such as two engines or four engines. The engine(s) may optionally be jet engine(s). The aircraft may be a wide-bodied aircraft or a narrow-bodied aircraft. The aircraft may be a single aisle aircraft or a double-aisle aircraft.

The aircraft may have a length of at least 30m, optionally at least 35m, optionally at least 40m, optionally at least 45m, optionally at least 50m, optionally at least 55m, optionally at least 60m, optionally at least 65m and optionally at least 70m.

The aircraft may have a maximum take-off weight of at least 50,000kg, optionally at least 100,000kg, optionally at least 150,000kg, optionally at least 200,000kg, optionally at least 250,000kg, optionally at least 300,000kg, optionally at least 350,000kg, optionally at least 400,000kg, optionally at least 450,000kg, optionally at least 500,000kg and optionally at least 550,000kg.

The aircraft may have a wingspan of at least 30m, optionally at least 35m, optionally at least 40m, optionally at least 45m, optionally at least 50m, optionally at least 55m, optionally at least 60m, optionally at least 65m, optionally at least 70m and optionally at least 75m.

The aircraft may be a passenger aircraft having a passenger seating capacity of at least 80, optionally at least 100, optionally at least 150, optionally at least 200, optionally at least 250, optionally at least 300, optionally at least 350, optionally at least 400, optionally at least 450 and optionally at least 500.

In accordance with a further merely illustrative embodiment, there is provided a method of sensing a parameter in a storage tank suitable for the storage of liquid gas, the method comprising:
transmitting and/or receiving signals via a sensor cord located in a feedthrough path, the feedthrough path being at least partially located in a feedthrough region between the storage tank inner and outer walls, the feedthrough region being isolated from an adjacent inter-wall region between a storage tank inner and a storage tank outer wall.

The method may comprise transmitting signals to, and/or receiving signals from, a sensor head via the sensor cord, the sensor head optionally being located in the storage tank. The sensor head may have the properties described above in relation to the storage tank arrangement of the first aspect of the present invention.

The sensor cord may be configured to transmit light. The sensor cord may be configured to transmit electrical signals.

The feedthrough path may comprise one or more features of the feedthrough path as described above in relation to the first aspect of the present invention. The feedthrough region may comprise one or more features of the feedthrough region described above in relation to the first aspect of the present invention.

The feedthrough path may be defined by inner and outer feedthrough arrangements. The inner and outer feedthrough arrangements may optionally be configured to form a seal with a respective surface. The inner and outer feedthrough arrangements may be configured to permit passage therethrough of one or more sensor cords and/or permit connection of one or more sensors. The inner and outer feedthrough arrangements may optionally comprise one or more features of the inner and outer feedthrough arrangements described above in relation to the first aspect of the present invention.

The feedthrough region may be isolated from the adjacent inter-wall region by a fluid-impermeable divider, wherein the fluid-impermeable divider is provided by a spacer arrangement for maintaining the storage tank inner and outer walls in spaced relationship. The spacer arrangement may comprise one or more features of the spacer arrangement described above in relation to the first aspect of the present invention.

The method may comprise transmitting and/or receiving signals via more than one sensor cords.

The method may comprise one or more features of the storage tank arrangement of the first aspect of the present invention.

The method may comprise one or more features of the method of the yet another merely illustrative embodiment. For example, the method may comprise transmitting and/or receiving signals via a sensor cord located in a container external of the storage tank outer wall.

In accordance with yet another merely illustrative embodiment, there is provided a method of sensing a parameter in a storage tank suitable for the storage of liquid gas, the storage tank comprising a tank inner wall and a tank outer wall separated by an insulating inter-wall region, the method comprising:
transmitting and/or receiving signals via a sensor cord located in a container external of the storage tank outer wall.

Optionally, one or both of an inner and an outer feedthrough arrangement may be provided. One or both of the inner and outer feedthrough arrangements may be configured to form a seal with a respective surface and to permit passage therethrough of one or more sensor cords, and/or permit connection of one or more sensors.

Optionally, configured to inhibit egress of the contents of the storage tank in the event of a failure of at least one of an inner and an outer feedthrough arrangement.

Optionally, the or each sensor cord may pass through a wall of the container.

- -

The method may comprise transmitting signals to, and/or receiving signals from, a sensor head via the sensor cord, the sensor head optionally being located in the storage tank. The sensor head may have the properties described above in relation to the storage tank arrangement of the first aspect of the present invention.

The sensor cord may be configured to transmit light. The sensor cord may be configured to transmit electrical signals.

For example, the method may comprise transmitting and/or receiving signals via a sensor cord located in a feedthrough path, the feedthrough path being at least partially located in a feedthrough region between the storage tank inner and outer walls, the feedthrough region being isolated from an adjacent inter-wall region between a storage tank inner and a storage tank outer wall.

### DESCRIPTION OF THE DRAWINGS

Embodiments of the present invention will now be described by way of example only with reference to the accompanying schematic drawings of which:
Figure 1 shows a schematic cross-sectional view of a merely illustrative storage tank arrangement;
Figure 2 shows a schematic cross-sectional view of another merely illustrative storage tank arrangement;
Figure 3 shows a schematic cross-sectional view of yet another merely illustrative storage tank arrangement;
Figure 4 shows a schematic cross-sectional view of a storage tank arrangement according to a first embodiment of the invention;
Figure 5 shows a perspective view of part of the storage tank arrangement of Figure 4;
Figure 6 shows a schematic view of an aircraft according to an embodiment of the present invention;
Figure 7 shows a perspective view of a pair of cord guides shown in Fig. 5;
Figure 8 shows a schematic representation of an example of a merely illustrative method; and
Figure 9 shows a schematic representation of a further example of a merely illustrative method.

### DETAILED DESCRIPTION

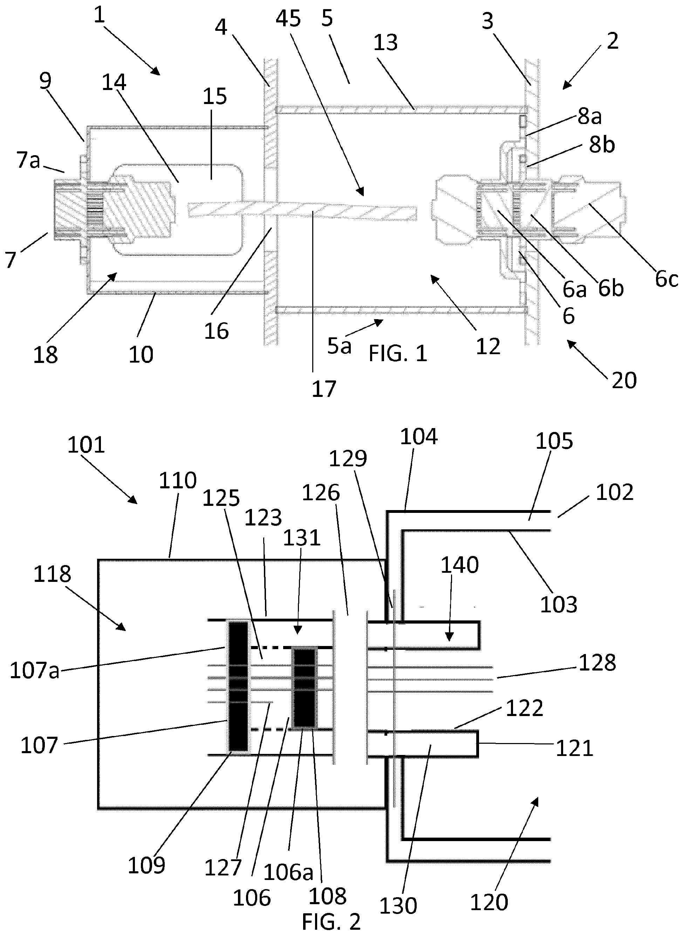

An example of an embodiment of a merely illustrative storage tank arrangement will now be described with reference to Fig. 1. The storage tank arrangement is denoted generally by reference numeral 1 and comprises a storage tank 2 suitable for the storage of volatile liquids, in this case liquid hydrogen. In this case, the storage tank arrangement is a fuel tank arrangement, storage tank 2 being a fuel tank of an aircraft. The storage tank 2 comprises a tank inner wall 3 and a tank outer wall 4 separated by an insulating inter-wall region 5. The tank inner wall 3 and outer wall 4 are maintained in spaced relationship by one or more spacers (not shown). The insulating inter-wall region 5 is a low-pressure region, the low pressure typically being achieved using a vacuum pump (not shown). The storage tank arrangement 1 comprises inner 6 and outer 7 feedthrough arrangements. Inner feedthrough arrangement 6 comprises feedthrough member 6a, which forms a seal with a respective part 8a of a surface of the storage tank arrangement 1. Feedthrough member 6a also permits passage therethrough of one or more sensors (not shown). Inner feedthrough arrangement 6 also comprises feedthrough member 6b, which forms a seal with a respective part 8b of a surface of the storage tank arrangement 1. Feedthrough member 6b also permits passage therethrough of one or more sensors (not shown). Both feedthrough members 6a, 6b form a seal against an outer surface of the tank inner wall 3. Feedthrough member 6b extends through an aperture (not labelled) in tank inner wall 3. Inner feedthrough arrangement 6 also comprises feedthrough member 6c, which abuts against and forms a seal with, feedthrough member 6b. Outer feedthrough arrangement 7 comprises a feedthrough member 7a that forms a seal with a surface 9 of the storage tank arrangement 1, in this case, an outer surface of a container 10. Feedthrough member 7a permits passage therethrough of one or more sensors (not shown). Feedthrough members 7a, 6a, 6b comprise one or more channels (not labelled) in which sensor wires may be located. The material forming said channels is typically a resiliently-deformable material that forms a sealing engagement with a sensor wire present in said channel. The inner 6 and outer 7 feedthrough arrangements are aligned to permit electrical wires and/or optical fibres to be pass from the exterior to the interior 20 of the storage tank 2, while minimising the risk of leaks from the interior 20 of the storage tank 2. This is achieved by providing suitable seals between (i) the respective feedthrough arrangement and a surface of the storage tank arrangement 1, and (ii) the respective feedthrough arrangement and any electrical wires and/or optical fibres that pass through the respective feedthrough arrangement.

As mentioned above, the storage tank arrangement 1 comprises a container 10. The container 10 is external of the storage tank outer wall 4, and it is configured to inhibit egress of the contents of the storage tank 2 from the storage tank 2 in the event of a failure of at least one of the inner 6 and outer 7 feedthrough arrangements. Container 10 is attached to storage tank outer wall 4, and forms a volume 18 between the container 10 and storage tank outer wall 4.

The storage tank arrangement 1 is also configured so that, in the event that the inner feedthrough arrangement 6 fails, the contents of the storage tank 2 are not permitted to enter the vast majority of the inter-wall region 5, the escaped contents being contained in a very small portion of the inter-wall region that is isolated from the vast majority of the inter-wall region. Entry of hydrogen gas into the inter-wall region 5 would lead to an increase in pressure in the inter-wall region 5, which would lead to a reduction in the thermal insulation properties of the inter-wall region, leading to unwanted heating of the contents of the storage tank 2. In this connection, the inner 6 and outer 7 feedthrough arrangements define a feedthrough path 45 therebetween, the feedthrough path 45 being at least partially located in a feedthrough region 12 between the storage tank inner 3 and outer 4 walls, the feedthrough region 12 being isolated from an adjacent 5a inter-wall region between the storage tank inner 3 and outer 4 walls. Feedthrough region 12 is isolated from the rest of the inter-wall region 5 by a fluid-impermeable divider 13 so that there is no fluid communication between feedthrough region 12 and the rest of the inter-wall region 5. During use, volume 18 and feedthrough region 12 are evacuated and are therefore at low pressure, with an aperture 16 in the storage tank outer wall 4 providing fluid communication between volume 18 and feedthrough region 12. Aperture 16 also permits electrical wires and/or optical fibres to pass therethrough. In the event of failure of inner feedthrough arrangement 6, hydrogen gas passes from the relatively-high pressure interior 20 of the storage tank 2 into the feedthrough region 12 and volume 18. Divider 13 prevents the hydrogen gas from entering the remainder of the inter-wall region 5. Container 10 inhibits escape of hydrogen gas into the ambient atmosphere.

Container 10 is provided with an aperture 14 that provides access to the interior of container 10 and, via aperture 16, to feedthrough region 12. A cover 15 is provided for aperture 14. The provision of the access aperture 14 means that a cable or cord overlength is not required during cord installation.

A sensor cord passing through the outer and inner feedthroughs is shown by reference numeral 17.

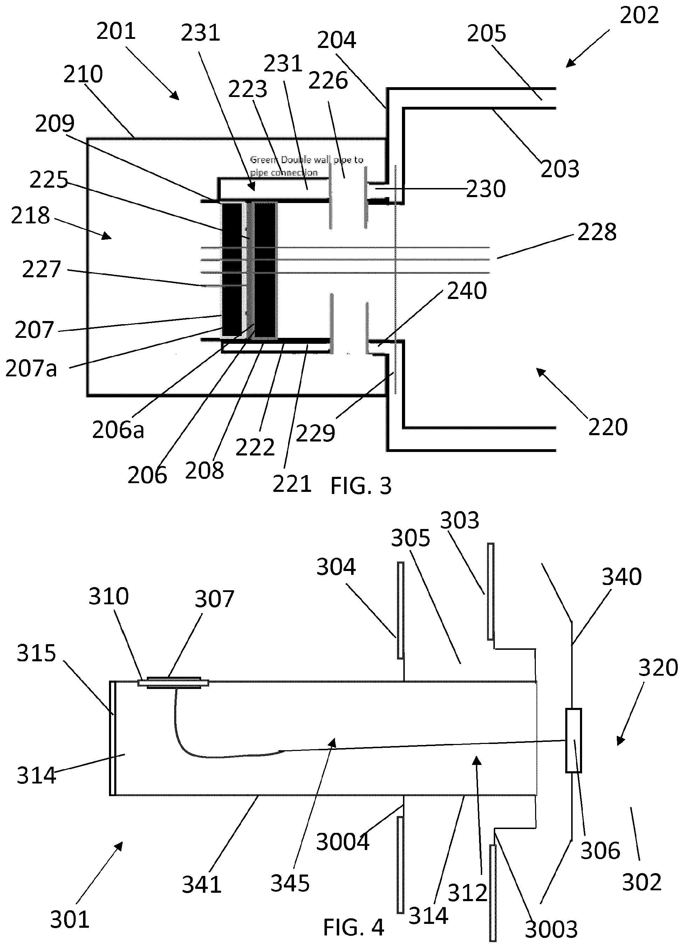

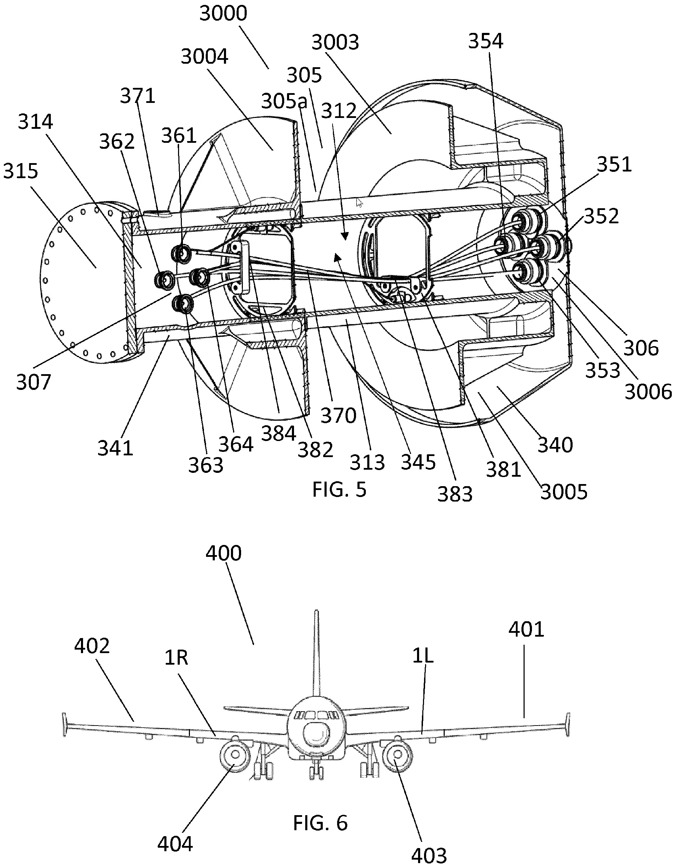

The terms "inner" and "outer" in relation to "inner feedthrough arrangement" and "outer feedthrough arrangement" refer to the relative positions of the "inner feedthrough arrangement" and "outer feedthrough arrangement". The inner feedthrough arrangement need not be the innermost feedthrough arrangement and the outer feedthrough arrangement need not be the outermost feedthrough arrangement, as will be discussed below in relation to the storage tank arrangement of Figs. 4 and 5.

An example of a further merely illustrative embodiment of a storage tank arrangement will now be described with reference to Fig. 2. The storage tank arrangement is denoted generally by reference numeral 101 and comprises a storage tank 102 suitable for the storage of volatile liquids, in this case liquid hydrogen. Once again, storage tank 102 is an aircraft fuel tank. The storage tank 102 comprises a tank inner wall 103 and a tank outer wall 104 separated by an insulating inter-wall region 105. The tank inner wall 103 and outer wall 104 are maintained in spaced relationship by one or more spacers (not shown). The insulating inter-wall region 105 is a low-pressure region, the low pressure typically being achieved using a vacuum pump (not shown). The storage tank arrangement 101 comprises inner 106 and outer 107 feedthrough arrangements. Inner feedthrough arrangement 106 comprises feedthrough member 106a, which forms a seal with a respective surface 108 of the storage tank arrangement 101. Feedthrough member 106a also permits passage therethrough of one or more sensors (not shown). Feedthrough member 106a forms a seal against an inner surface of the conduit inner wall 122 of a two-walled conduit 121. Conduit 121 has a conduit inner wall 122 and a conduit outer wall 123 separated by a conduit inter-wall region 130. Outer feedthrough arrangement 107 comprises a feedthrough member 107a that forms a seal with a surface 109 of the storage tank arrangement 101, in this case, an inner surface of the conduit outer wall 123.

Conduit outer wall 123, feedthrough member 106a and feedthrough member 107a define a region 125 that may be used to detect for leaks. In this connection, a pressure sensor 127 extends into leak detection region 125. In the event of a failure of inner feedthrough arrangement 106, hydrogen gas will enter leak detection region 125, changing the pressure in leak detection region 125 sufficiently so that the change in pressure will be detected by pressure sensor 127. Alternatively, a hydrogen sensor may be used instead of a pressure sensor. Further sensors 128 extend through both the outer 107 and inner 106 feedthrough arrangements into the interior 120 of storage tank 102. Those sensors may be of any suitable type, such as temperature sensors, pressure sensors, sensors for the detection and/or measurement of liquid hydrogen, sensors for the detection and/or measurement of gaseous hydrogen.

Feedthrough members 106a, 107a may have one or more of the features described above in relation to the storage tank arrangement 1 described above in relation to Fig. 1.

Storage tank arrangement 101 comprises a container 110. The container 110 is external of the storage tank outer wall 104, and it is configured to inhibit egress of the contents of the storage tank 102 from the storage tank 102 in the event of a failure of at least one of the inner 106 and outer 107 feedthrough arrangements. Container 110 is attached to storage tank outer wall 104 and forms a volume 118 between the container 110 and storage tank outer wall 104.

Conduit 121 extends into the interior 120 of storage tank 102, and also extends into volume 118 defined by container 110 and storage tank outer wall 104. A removable conduit portion 131 is removably attached to conduit further portion 140 by a suitable connector 126, which permits removal and reattachment of removable conduit portion 131. Conduit further portion 140 is attached to storage tank 102. Removable conduit portion 131 comprises both the inner 106 and outer 107 feedthrough arrangements, and leak detection region 125. The removability of removable conduit portion 131 facilitates easier replacement and/or servicing of the inner 106 and outer 107 feedthrough arrangements.

Storage tank arrangement 101 is provided with a bellows 129 which permits relative movement of the storage tank inner 103 and outer 104 walls, for example, movement that may occur due to shrinkage and/or expansion of the respective walls, dependent on the temperature to which those walls are subjected.

A further example of a further embodiment of a merely illustrative storage tank arrangement will now be described with reference to Fig. 3. The storage tank arrangement is denoted generally by reference numeral 201 and comprises a storage tank 202 suitable for the storage of volatile liquids, in this case liquid hydrogen. The storage tank 202 is an aircraft fuel tank. The storage tank 202 comprises a tank inner wall 203 and a tank outer wall 204 separated by an insulating inter-wall region 205. The tank inner wall 203 and outer wall 204 are maintained in spaced relationship by one or more spacers (not shown). The insulating inter-wall region 205 is a low-pressure region, the low pressure typically being achieved using a vacuum pump (not shown). The storage tank arrangement 201 comprises inner 206 and outer 207 feedthrough arrangements. Inner feedthrough arrangement 206 comprises feedthrough member 206a, which forms a seal with a respective surface 208 of the storage tank arrangement 201. Feedthrough member 206a also permits passage therethrough of one or more sensors (not shown). Feedthrough member 206a forms a seal against an inner surface of the conduit inner wall 222 of a two-walled conduit 221. Conduit 221 has a conduit inner wall 222 and a conduit outer wall 223 separated by a conduit inter-wall region 230. Outer feedthrough arrangement 207 comprises a feedthrough member 207a that forms a seal with a surface 209 of the storage tank arrangement 201, in this case, an inner surface of the conduit inner wall 222.

Conduit inner wall 222, feedthrough member 206a and feedthrough member 207a define a region 225 that may be used to detect for leaks. It is worth noting that region 225 in the storage tank arrangement 201 of Fig. 3 is far smaller than region 125 described above in relation to storage tank arrangement 101 of Fig. 2. A pressure sensor 227 extends into leak detection region 225, which is sufficiently large to accommodate pressure sensor 227, but no larger. In the event of a failure of inner feedthrough arrangement 206, hydrogen gas will enter leak detection region 225, changing the pressure in leak detection region 225. Alternatively, a hydrogen sensor may be used instead of a pressure sensor. Further sensors 228 extend through both the outer 207 and inner 206 feedthrough arrangements into the interior 220 of storage tank 202. Those sensors may be of any suitable type, such as temperature sensors, pressure sensors, sensors for the detection and/or measurement of liquid hydrogen, sensors for the detection and/or measurement of gaseous hydrogen.

Feedthrough members 206a, 207a may have one or more of the features described above in relation to the storage tank arrangement 1 described above in relation to Fig. 1.

Storage tank arrangement 201 comprises a container 210. The container 210 is external of the storage tank outer wall 204, and it is configured to inhibit egress of the contents of the storage tank 202 from the storage tank 202 in the event of a failure of at least one of the inner 206 and outer 207 feedthrough arrangements. Container 210 is attached to storage tank outer wall 204 and forms a volume 218 between the container 210 and storage tank outer wall 204.

In contrast to the storage tank arrangement of Fig. 2, conduit 221 does not extend into the interior 220 of storage tank 202. Conduit 221 extends outwardly from storage tank inner 203 and outer 204 walls. Conduit inner wall 222 is attached to storage tank inner wall 203 and conduit outer wall 223 is attached to storage tank outer wall 204 such that inter-wall region 205 is in fluid communication with conduit inter-wall region 230. Conduit 221 extends into volume 218 define by container 210 and storage tank outer wall 204. A conduit inner portion 240 is attached to storage tank 102. Conduit outer portion 231 is removably attached to conduit inner portion 240 by a suitable connector 226, which permits removal and reattachment of conduit outer portion 231. Conduit outer portion 231 comprises both the inner 206 and outer 207 feedthrough arrangements, and leak detection region 225. The removability of conduit outer portion 231 facilitates easier replacement and/or servicing of the inner 206 and outer 207 feedthrough arrangements.

Storage tank arrangement 201 is provided with a bellows 229 which permits relative movement of the storage tank inner 203 and outer2104 walls, for example, movement that may occur due to shrinkage and/or expansion of the respective walls, dependent on the temperature to which those walls are subjected.

An example of an embodiment of a storage tank arrangement in accordance with the first aspect of the present invention will now be described with reference to Figs. 4, 5 and 7. The storage tank arrangement is denoted generally by reference numeral 301 and comprises a storage tank 302 suitable for the storage of volatile liquids, in this case liquid hydrogen. The storage tank 302 is an aircraft fuel tank. The storage tank 302 comprises a tank inner wall 303 and a tank outer wall 304 separated by an insulating inter-wall region 305. The tank inner wall 303 and outer wall 304 are maintained in spaced relationship by a spacer arrangement shown in Fig. 5 and denoted generally by reference numeral 3000. The spacer arrangement 3000 comprises an inner attachment portion 3003 in the form of a flange that is attached to the storage tank inner wall 303. The spacer arrangement 3000 comprises an outer attachment portion 3004 in the form of a flange that is attached to the storage tank outer wall 304. The spacer arrangement 3000 also comprises a spacing portion 341 in the form of a cylindrical portion which acts as a spacer for the inner 3003 and outer 3004 attachment portions, and therefore acts as a spacer for the storage tank inner 303 and outer 304 walls. The spacer arrangement 3000 is sometimes known to those skilled in the art as a "polar mount". The insulating inter-wall region 305 is a low-pressure region, the low pressure typically being achieved using a vacuum pump (not shown). The storage tank arrangement 301 comprises inner 306 and outer 307 feedthrough arrangements. Inner feedthrough arrangement 306 comprises four feedthrough members 351, 352, 353, 354 in a plate 3006 mounted in wall 340. Wall 340 is typically provided as part of the spacer arrangement 3000. Wall 340 and inner attachment portion 3003 define a space 3005 that is provided with insulation (not shown). Each feedthrough member 351, 352, 353, 354 forms a seal against plate 3006. Each feedthrough member 351, 352, 353, 354 provides a port for the connection of an electrical wire and/or optical fibre. Outer feedthrough arrangement 307 comprises four feedthrough members 361, 362, 363, 364 mounted in a wall (not labelled) of cylinder 341. Each feedthrough member 361, 362, 363, 364 forms a seal against the wall of cylinder 341. Each feedthrough member 361, 362, 363, 364 provides a port for the connection of an electrical wire and/or optical fibre. An electrical cable (shown collectively as 370) extends between each respective pair (351, 361), (352, 362), (353, 363) and (354, 364) of feedthrough members. This facilitates simple connection of sensors.

Storage tank arrangement 301 is configured so that, in the event that the inner feedthrough arrangement 306 fails, the contents of the storage tank 302 are not permitted to enter the vast majority of the inter-wall region 305. Inner 306 and outer 307 feedthrough arrangements define a feedthrough path 345 therebetween, the feedthrough path 345 being at least partially located in a feedthrough region 312 between the storage tank inner 303 and outer 304 walls, the feedthrough region 312 being isolated from the remainder of inter-wall region 305 between the storage tank inner 303 and outer 304 walls. Feedthrough region 312 is isolated from the remainder of the inter-wall region 305 by a wall of the cylinder 341 which wall acts as a fluid-impermeable divider 313 so that there is no fluid communication between feedthrough region 312 and the remainder of inter-wall region 305. During use, the interior of cylinder 341 is at ambient pressure. In the event of failure of inner feedthrough arrangement 306, hydrogen gas passes from the relatively-high pressure interior 320 of the storage tank 302 into the interior of the cylinder 341. Divider 313 prevents the hydrogen gas from entering the inter-wall region 305.

Cylinder 341 comprises an aperture 314 through which the interior of the cylinder 341 can be accessed. Endplate 315 acts as a removable cover that facilitates access to aperture 314. Furthermore, outer feedthrough arrangement 307 is located in a removable access plate 310, which access plate 310 covers an access aperture (not shown).

Vacuum port 371 is provided to facilitate evacuation (and repressurisation) of the feedthrough region 312. Evacuation of the feedthrough region 312 also evacuates the space 3005 between wall 340 and inner attachment portion 3003. This reduces the conduction of heat into the interior 320 of the storage tank.

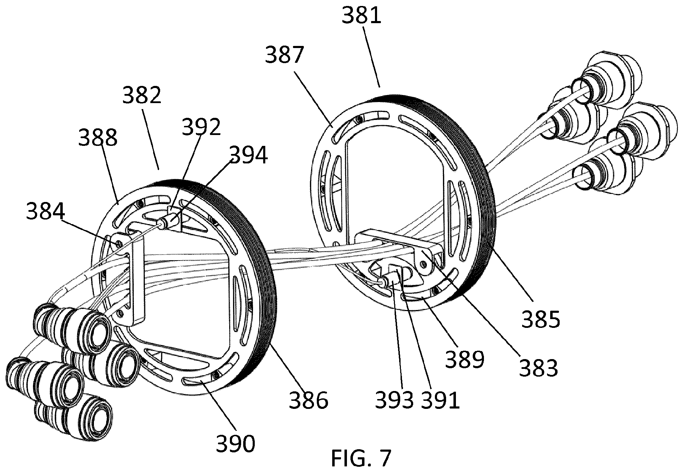

Two cable guides 381, 382 are provided inside cylinder 341, as best shown in Fig. 7. Each cable guides 381, 382 comprises a mount 385, 386 having a circular perimeter which is attached to the interior surface of the cylinder 341 wall. Each cable guide 381, 382 comprises a carrier portion 387, 388, which is generally circular in shape and which is attached to the outer surface of each mount 385, 386. Each carrier portion 387, 388 is provided with a plurality of curved slots, two of which are labelled 389, 390. Those slots receive a fixing member (not shown). The carrier portion 387, 388 may be rotated relative to the mount 385, 386 by an amount dictated by the length of the slots. This allows the orientation of the cable guide to be adjusted, but does not allow over-rotation of the cable guide which may cause cables or cords to cross. Each carrier portion 387, 388 comprises a comprises a clamp member 383, 384 for securing cables. Each cable guide 381, 382 is provided with a sensor mount 391, 392 in which sensors 393, 394 are mounted. Sensor 393 is a pressure sensor and sensor 394 is a hydrogen sensor.

The present feedthrough arrangement 301 makes use of an existing part of a storage tank (the polar mount or cylinder 341), therefore no extra or new structures are needed that potentially introduce new leakage paths into the storage tank.

An example of an embodiment of a vehicle, in this case an aircraft, in accordance with the second aspect of the present invention will now be described with reference to Fig. 6. The aircraft is denoted generally by reference numeral 400 and is a narrow bodied, single aisle aircraft. The aircraft 400 comprises two engines 403, 404, each mounted on a respective wing 401, 402. Each engine 403, 404 is configured to receive liquid hydrogen fuel from a respective storage tank arrangement 1L, 1R, located in a respective wing 401, 402.

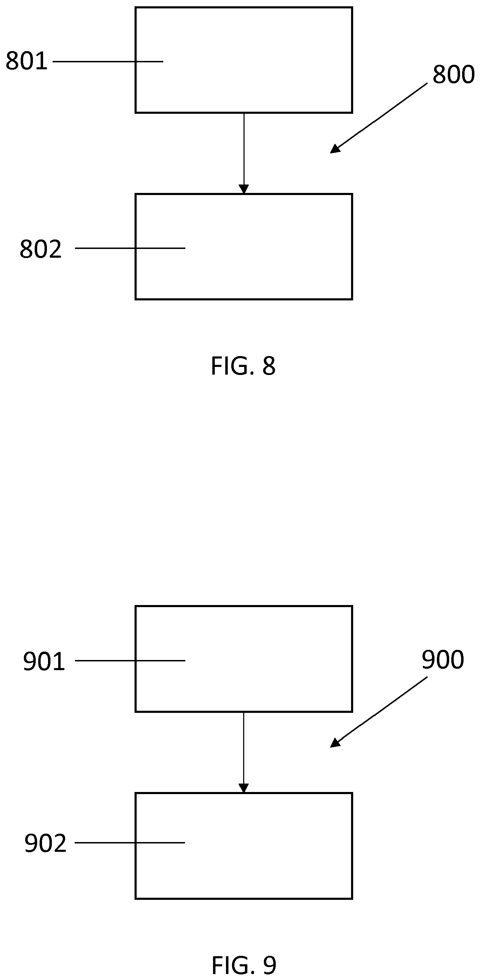

An example of an embodiment of a merely illustrative method of sensing a parameter in a storage tank suitable for the storage of liquid gas will now be described with reference to Fig. 8. The method is denoted generally by reference numeral 800 and comprises transmitting 801 signals via a sensor cord located in a feedthrough path 45, 345 to a sensor head, the feedthrough path 345 being at least partially located in a feedthrough region 12, 312 between the storage tank inner 3, 303 and outer 4, 304 walls, the feedthrough region being isolated from an adjacent inter-wall region 5, 305 between a storage tank inner 3, 303 and a storage tank outer wall 4, 304. The method 800 also comprises receiving 802 signals via the sensor cord from the sensor head.

An example of an embodiment of a merely illustrative method of sensing a parameter in a storage tank suitable for the storage of liquid gas will now be described with reference to Fig. 9. The method is denoted generally by reference numeral 900. The method 900 comprises transmitting 901 signals to a sensor head via a sensor cord located in a container 10, 110, 210 external of the storage tank outer wall 4, 104, 204. The method also comprises receiving 902 signals from the sensor head via the sensor cord located in the container 10, 110, 210.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The examples above describe storage tank arrangements that comprise a container for inhibiting egress of the contents of the storage tank in the event of failure of one or more feedthrough arrangements. Those skilled in the art will realise that such containers are not needed for the storage tank arrangements of the second aspect of the invention.

The examples above describe storage tank arrangements for the storage of liquid hydrogen. Those skilled in the art will realise that the present invention may be used in relation to storage tank arrangements for the storage of other volatile liquids, such as liquid petroleum gas, liquid nitrogen or liquid oxygen.

The examples above describe storage tank arrangements used as aircraft fuel tanks. Those skilled in the art will realise that the storage tank arrangements of the present invention may be used in other vehicles, such as land-based vehicles, such as road and/or rail-based vehicles, and in water-based vehicles, such as boats and ships.

The examples above describe storage tank arrangements used as aircraft fuel tanks. Those skilled in the art will realise that although the storage tank arrangements of the present invention are of particular relevance to vehicles, the storage tank arrangements of the present invention may be used other than in or with a vehicle.

It will be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A storage tank arrangement (301) suitable for the storage of liquid gas, comprising:
a storage tank (302) suitable for the storage of liquid gas comprising a storage tank inner wall (303) and a storage tank outer wall (304) separated by an insulating inter-wall region (305);
inner (306) and outer (307) feedthrough arrangements, each configured to form a seal with a respective surface of the storage tank arrangement and to permit passage therethrough of one or more sensor cords, and/or permit connection of one or more sensors; and
the inner and outer feedthrough arrangements defining a feedthrough path (345) therebetween, the feedthrough path being at least partially located in a feedthrough region between the storage tank inner and outer walls, the feedthrough region being isolated from an adjacent inter-wall region between the storage tank inner and outer walls;
wherein the feedthrough region is isolated from the adjacent inter-wall region by a fluid-impermeable divider (313), wherein the fluid-impermeable divider is provided by a spacer arrangement (3000) for maintaining the storage tank inner and outer walls in spaced relationship;
wherein the spacer arrangement comprises an inner attachment portion (3003) for securing the spacer arrangement to the storage tank inner wall, an outer attachment portion (3004) for securing the spacer arrangement to the storage tank outer wall and a spacing portion (341) for maintaining the inner and outer attachment portions in spaced relationship;
wherein the storage tank arrangement comprises a third wall (340), the third wall being located internally of the storage tank inner wall, the inner feedthrough arrangement being sealed to the third wall;
**characterised in that**:
the third wall and the inner attachment portion define a space (3005) therebetween for the receipt of insulating material.

2. The storage tank arrangement of claim 1, wherein a portion of the spacer arrangement extends externally of the storage tank outer wall, and a portion of the spacer arrangement is optionally located inwardly of the storage tank inner wall.

3. The storage tank arrangement of claim 1 or claim 2, wherein the spacing portion provides the feedthrough region and/or the spacing portion comprises an elongate hollow portion.

4. The storage tank arrangement of any preceding claim comprising one or more cord guides (381, 382) for securing one or more cords, optionally wherein one or more cord guides are located between the inner and outer feedthrough arrangements.

5. The storage tank arrangement of claim 4, wherein the or each cord guide comprises a cord guide mount (385, 3860 for mounting the cord guide to the storage tank arrangement and a carrier portion (387, 388) that is attachable to the cord guide mount, the carrier portion being attachable to the cord guide mount in a plurality of different orientations.

6. The storage tank arrangement of any preceding claim, wherein one or more of the inner and outer feedthrough arrangements comprises one or more feedthrough elements (351, 352, 353, 354, 361, 362, 363, 364), each feedthrough element being configured to form a seal with a respective surface of the storage tank arrangement and to permit passage therethrough of one or more sensor cords, and/or permit connection of one or more sensors, optionally wherein a first feedthrough element is configured to form a seal with a first portion of a surface of the storage tank inner wall or the storage tank outer wall, and a second feedthrough element is configured to form a seal with a second portion of said surface of the storage tank inner wall or the storage tank outer wall..

7. The storage tank arrangement of any preceding claim, wherein the inner and outer feedthrough arrangements are configured to define a region therebetween for the location of one or more sensor heads and/or one or both of the inner and outer feedthrough arrangements comprise(s) a plurality of feedthrough ports, each one being for the passage therethrough of one or more sensor cords, or for connection to one or more sensors.

8. The storage tank arrangement of any preceding claim, wherein the storage tank arrangement comprises a vacuum port (371) to facilitate evacuation of the feedthrough region and the space defined between the third wall and the inner attachment portion.

9. A vehicle (400) comprising a storage tank arrangement in accordance with any preceding claim and one or more engines (403, 404) configured to receive fuel from the storage tank arrangement.

## Patentansprüche

1. Lagertankanordnung (301), die zur Lagerung von Flüssiggas geeignet ist, umfassend:
einen Lagertank (302), der zur Lagerung von Flüssiggas geeignet ist, umfassend eine Lagertankinnenwand (303) und eine Lagertankaußenwand (304), die durch ein isolierendes Zwischenwandgebiet (305) getrennt sind;
innere (306) und äußere (307) Durchführungsanordnungen, die jeweils dazu ausgelegt sind, eine Abdichtung mit einer jeweiligen Oberfläche der Lagertankanordnung zu bilden und den Durchgang eines oder mehrerer Sensorkabel durch diese zu ermöglichen und/oder den Anschluss eines oder mehrerer Sensoren zu ermöglichen; und
wobei die innere und die äußere Durchführungsanordnung einen Durchführungsweg (345) dazwischen definieren, wobei der Durchführungsweg zumindest teilweise in einem Durchführungsgebiet zwischen der inneren und der äußeren Wand des Lagertanks angeordnet ist, wobei das Durchführungsgebiet von einem angrenzenden Zwischenwandgebiet zwischen der Innen- und Außenwand des Lagertanks isoliert ist;
wobei das Durchführungsgebiet von dem angrenzenden Zwischenwandgebiet durch einen fluidundurchlässigen Teiler (313) isoliert ist, wobei der fluidundurchlässige Teiler durch eine Abstandshalteranordnung (3000) bereitgestellt wird, um die Innen- und Außenwand des Lagertanks in einer beabstandeten Beziehung zu halten;
wobei die Abstandshalteranordnung einen inneren Befestigungsabschnitt (3003) zum Befestigen der Abstandshalteranordnung an der Lagertankinnenwand, einen äußeren Befestigungsabschnitt (3004) zum Befestigen der Abstandshalteranordnung an der Lagertankaußenwand und einen Abstandsabschnitt (341) zum Halten des inneren und äußeren Befestigungsabschnitts in einer beabstandeten Beziehung umfasst;
wobei die Lagertankanordnung eine dritte Wand (340) umfasst, wobei sich die dritte Wand innerhalb der Lagertankinnenwand befindet, wobei die innere Durchführungsanordnung mit der dritten Wand abgedichtet ist;
**dadurch gekennzeichnet, dass**:
die dritte Wand und der innere Befestigungsabschnitt einen Raum (3005) dazwischen zur Aufnahme von Isoliermaterial definieren.

2. Lagertankanordnung nach Anspruch 1, wobei sich ein Abschnitt der Abstandshalteranordnung außerhalb der Lagertankaußenwand erstreckt und sich ein Abschnitt der Abstandshalteranordnung optional innerhalb der Lagertankinnenwand befindet.

3. Lagertankanordnung nach Anspruch 1 oder Anspruch 2, wobei der Abstandsabschnitt das Durchführungsgebiet bereitstellt und/oder der Abstandsabschnitt einen länglichen hohlen Abschnitt umfasst.

4. Lagertankanordnung nach einem der vorhergehenden Ansprüche, die eine oder mehrere Kabelführungen (381, 382) zum Befestigen eines oder mehrerer Kabel umfasst, wobei optional eine oder mehrere Kabelführungen zwischen der inneren und der äußeren Durchführungsanordnung angeordnet sind.

5. Lagertankanordnung nach Anspruch 4, wobei die oder jede Kabelführung eine Kabelführungshalterung (385, 386) zum Befestigen der Kabelführung an der Lagertankanordnung und einen Trägerabschnitt (387, 388), der an der Kabelführungshalterung befestigbar ist, umfasst, wobei der Trägerabschnitt an der Kabelführungshalterung in mehreren unterschiedlichen Ausrichtungen befestigbar ist.

6. Lagertankanordnung nach einem der vorhergehenden Ansprüche, wobei eine oder mehrere der inneren und äußeren Durchführungsanordnungen ein oder mehrere Durchführungselemente (351, 352, 353, 354, 361, 362, 363, 364) umfassen, wobei jedes Durchführungselement dazu ausgelegt ist, eine Abdichtung mit einer jeweiligen Oberfläche der Lagertankanordnung zu bilden und einen Durchgang eines oder mehrerer Sensorkabel durch diese zu ermöglichen und/oder einen Anschluss eines oder mehrerer Sensoren zu ermöglichen, wobei optional ein erstes Durchführungselement dazu ausgelegt ist, eine Abdichtung mit einem ersten Abschnitt einer Oberfläche der Lagertankinnenwand oder der Lagertankaußenwand zu bilden, und ein zweites Durchführungselement dazu ausgelegt ist, eine Abdichtung mit einem zweiten Abschnitt der Oberfläche der Lagertankinnenwand oder der Lagertankaußenwand zu bilden.

7. Lagertankanordnung nach einem der vorhergehenden Ansprüche, wobei die innere und die äußere Durchführungsanordnung dazu ausgelegt sind, einen Bereich dazwischen für die Position eines oder mehrerer Sensorköpfe zu definieren und/oder eine oder beide aus der inneren und der äußeren Durchführungsanordnung mehrere Durchführungsöffnungen umfassen, wobei jede für den Durchgang eines oder mehrerer Sensorkabel durch diesen oder für die Verbindung mit einem oder mehreren Sensoren vorgesehen ist.

8. Lagertankanordnung nach einem der vorhergehenden Ansprüche, wobei die Lagertankanordnung einen Unterdruckanschluss (371) umfasst, um das Evakuieren des Durchführungsgebiets und des Raums, der zwischen der dritten Wand und dem inneren Befestigungsabschnitt definiert ist, zu erleichtern.

9. Fahrzeug (400), das eine Lagertankanordnung nach einem der vorhergehenden Ansprüche und einen oder mehrere Kraftmaschinen (403, 404) umfasst, die dazu ausgelegt sind, Kraftstoff von der Lagertankanordnung aufzunehmen.

## Revendications

1. Agencement de réservoir de stockage (301) adapté au stockage de gaz liquide, comprenant :
un réservoir de stockage (302) adapté au stockage de gaz liquide comprenant une paroi interne (303) de réservoir de stockage et une paroi externe (304) de réservoir de stockage séparées par une région isolante entre les parois (305) ;
des agencements de traversée interne (306) et externe (307), chacun étant conçu pour former un joint d'étanchéité avec une surface respective de l'agencement de réservoir de stockage et pour permettre le passage à travers celui-ci d'un ou plusieurs cordons de capteur, et/ou pour permettre la connexion d'un ou plusieurs capteurs ; et
les agencements de traversée interne et externe définissant un chemin de traversée (345) entre eux, le chemin de traversée étant au moins partiellement situé dans une région de traversée entre les parois interne et externe du réservoir de stockage, la région de traversée étant isolée d'une région adjacente entre les parois interne et externe du réservoir de stockage ;
dans lequel la région de traversée est isolée de la région adjacente entre les parois par un diviseur imperméable au fluide (313), le diviseur imperméable au fluide étant constitué par un agencement d'espacement (3000) pour maintenir les parois interne et externe du réservoir de stockage dans une relation espacée ;
dans lequel l'agencement d'espacement comprend une partie de fixation interne (3003) pour fixer l'agencement d'espacement à la paroi interne du réservoir de stockage, une partie de fixation externe (3004) pour fixer l'agencement d'espacement à la paroi externe du réservoir de stockage et une partie d'espacement (341) pour maintenir les parties de fixation interne et externe dans une relation espacée ;
dans lequel l'agencement de réservoir de stockage comprend une troisième paroi (340), la troisième paroi étant située à l'intérieur de la paroi interne du réservoir de stockage, l'agencement de traversée interne étant scellé à la troisième paroi ;
**caractérisé en ce que** :
la troisième paroi et la partie de fixation interne définissent un espace (3005) entre elles pour recevoir un matériau isolant.

2. Agencement de réservoir de stockage selon la revendication 1, dans lequel une partie de l'agencement d'espacement s'étend à l'extérieur de la paroi externe du réservoir de stockage, et une partie de l'agencement d'espacement est facultativement située vers l'intérieur de la paroi interne du réservoir de stockage.

3. Agencement de réservoir de stockage selon la revendication 1 ou la revendication 2, dans lequel la partie d'espacement fournit la région de traversée et/ou la partie d'espacement comprend une partie creuse allongée.

4. Agencement de réservoir de stockage selon l'une quelconque des revendications précédentes, comprenant un ou plusieurs guides de cordon (381, 382) pour fixer un ou plusieurs cordons, facultativement dans lequel un ou plusieurs guides de cordon sont situés entre les agencements de traversée interne et externe.

5. Agencement de réservoir de stockage selon la revendication 4, dans lequel le ou chaque guide de cordon comprend un support de guide de cordon (385, 386) pour monter le guide de cordon sur l'agencement de réservoir de stockage et une partie de support (387, 388) qui peut être fixée au support de guide de cordon, la partie de support pouvant être fixée au support de guide de cordon dans une pluralité d'orientations différentes.

6. Agencement de réservoir de stockage selon l'une quelconque des revendications précédentes, dans lequel un ou plusieurs des agencements de traversée interne et externe comprennent un ou plusieurs éléments de traversée (351, 352, 353, 354, 361, 362, 363, 364), chaque élément de traversée étant conçu pour former un joint d'étanchéité avec une surface respective de l'agencement de réservoir de stockage et pour permettre le passage à travers celui-ci d'un ou plusieurs cordons de capteur, et/ou pour permettre la connexion d'un ou plusieurs capteurs, facultativement un premier élément de traversée étant conçu pour former un joint d'étanchéité avec une première partie d'une surface de la paroi interne du réservoir de stockage ou de la paroi externe du réservoir de stockage, et un second élément de traversée étant conçu pour former un joint d'étanchéité avec une seconde partie de ladite surface de la paroi interne du réservoir de stockage ou de la paroi externe du réservoir de stockage.

7. Agencement de réservoir de stockage selon l'une quelconque des revendications précédentes, dans lequel les agencements de traversée interne et externe sont conçus pour définir une région entre eux pour l'emplacement d'une ou plusieurs têtes de capteur et/ou l'un ou les deux agencements de traversée interne et externe comprennent une pluralité d'orifices de traversée, chacun étant destiné au passage à travers un ou plusieurs cordons de capteur, ou à la connexion à un ou plusieurs capteurs.

8. Agencement de réservoir de stockage selon l'une quelconque des revendications précédentes, dans lequel l'agencement de réservoir de stockage comprend un orifice d'aspiration (371) pour faciliter l'évacuation de la région de traversée et de l'espace défini entre la troisième paroi et la partie de fixation interne.

9. Véhicule (400) comprenant un agencement de réservoir de stockage selon l'une quelconque des revendications précédentes et un ou plusieurs moteurs (403, 404) configurés pour recevoir du carburant provenant de l'agencement de réservoir de stockage.
